# EUROPEAN PATENT SPECIFICATION

(11) **EP 4 217 153 B1**
(45) Date of publication and mention of the grant of the patent: **09.12.2026**
(21) Application number: 20780189.5
(22) Date of filing: 24.09.2020
(51) Int. Cl.: B25J 9/16, B25J 5/00, B25J 13/00, G02B 27/01

(54) **SYSTEM AND METHOD FOR INDICATING A PLANNED ROBOT MOVEMENT**
SYSTEM UND VERFAHREN ZUR ANZEIGE EINER GEPLANTEN ROBOTERBEWEGUNG
SYSTÈME ET PROCÉDÉ POUR INDIQUER UN DÉPLACEMENT DE ROBOT PLANIFIÉ

(43) Date of publication of application: 02.08.2023
(73) Proprietor: ABB Robotics Schweiz AG, 8050 Zürich (CH)
(72) Inventor: AZHAR, Saad, 724 77 Västerås (SE); LE, Duy Khanh, 722 22 Västerås (SE)
(74) Representative: Kransell & Wennborg KB
(86) International application number: PCT/EP2020/076728
(87) International publication number: WO 2022/063403

(56) References cited:
- US-A1- 2019 299 412
- US-A1- 2019 373 395
- US-A1- 2020 039 427

## Description

### TECHNICAL FIELD

The present disclosure relates to the field of human-machine interaction and human-robot interaction in particular. The disclosure proposes a system and a method for indicating a planned movement path of a robotic device.

### BACKGROUND

Mobile robots are increasingly used for autonomous transportation tasks in industrial environment, such as factories. However, the increasing presence of transportation robots means that their interaction with humans (e.g., workers, operators, users) in the factory has to be managed with great care. In other words, the field of human-robot interaction with regard to mobile robots needs to be developed further.

The presence of mobile robots in a factory or plant can lead to collisions between their movements and operators in the factory if these people are not well informed about their future movements. While mobile robots can be fitted with advanced sensors to reduce the likelihood of collisions, the programmed behavior usually falls into one of two main approaches, either to stop if a collision is detected (collision detection approach) or to change route or speed so as to avoid an anticipated collision (collision avoidance approach). Neither of these approaches is a complete guarantee against collisions, and accidents do occur, causing work interruption and delays at the very least. Besides this, from time to time, operators or supervisors will need to investigate the movement information of a robot, e.g., its origin or next waypoint, for inspection or maintenance purposes.

Existing solutions that involve physical modifications of the environment (e.g., highlighting tape on the floor) or on the robots (e.g., installing additional displays) are not scalable and not easily adaptable when requirements change over time. Solutions relying on augmented reality (AR) techniques may be preferable in this respect though they have other limitations.

WO2019173396 discloses techniques for using AR to improve coordination between human and robot actors. Various embodiments provide predictive graphical interfaces such that a teleoperator controls a virtual robot surrogate, rather than directly operating the robot itself, providing the user with foresight regarding where the physical robot will end up and how it will get there. Using a human interface module, a probabilistic or other indicator of those paths may be displayed via an augmented reality display in use by a human to help aid the human in understanding the anticipated path, intent, or activities of robot. The human-intelligible presentation may indicate the position of the robot within the environment, objects within the environment, and/or collected data. For example, an arrow may be shown that always stays 15 seconds ahead of an aerial robot. As another example, the human interface module may display one or more visual cues (e.g., projections, holograms, lights, etc.) to advise nearby users of the intent of robot.

US20190299412 discloses an AR system for displaying virtual illustrations of an actual position aP and a future position zP of a working unit. The virtual illustrations are shown on top of an imaged working environment by a display unit 1c, which may be held by a user A. A visual sequence can be used to illustrate the transition from aP to zP. Different warnings may be issued if the user A is found to be in the working unit's monitoring area, in a protective area, or if he is at risk of colliding with the working unit. A warning color may be used to indicate a collision. Moreover, the current and future working areas are displayed, which have predefined geometries and display styles.

US20200039427 discloses a mobile robot which uses light projected on a "target projection surface" to provide indications relating to its own future planned path, in the form of text or images visible to bystanders. The target projection surface may be a floor or a wall. The color of the projection is variable and chosen to ensure good visibility relative to the target projection surface. The projection shall avoid fixed or moving obstacles, including humans, which are present on the target projection surface. The projection of the planned path may be augmented with auxiliary indication information, such as the mobile robot's planned speed.

### SUMMARY

One objective of the present disclosure is to make available an improved method and system for indicating to a user a planned movement path of a robotic device. Another objective is to augment the indication with at least one quantity derivable from the movement path. Another objective is to leverage techniques from augmented reality (AR), extended reality (XR) and/or virtual reality (VR) to provide such indication. A further objective is to propose a human-robot interface that improves the safety in environments where mobile robotic devices operate.

These and other objects are achieved by the invention, as defined by the appended independent claims. The dependent claims are directed to embodiments of the invention.

In a first aspect, there is provided a method of indicating a condition of one or more mobile robotic devices to a user, which comprises the steps set forth in claim 1. A visualization that is responsive to two or more of the mentioned quantities falls within the scope of claim 1, just like a visualization that is responsive to several robotic devices' value of one quantity.

It is understood that a "planned movement path" in the sense of the claims is a data structure or other collection of information that represents locations of the at least one robotic device at different points in time. The information may include specifics of the robotic device, such as inherent or semi-inherent properties (e.g., a hardware identifier, a basic mass, dimensions) and variable properties (e.g., a currently mounted robot tool, an assigned temporary identifier valid to be used for calls in a particular work environment, a current load). A visualization may be "responsive to" a quantity if a feature or characteristic of the visualization - or a feature or characteristic of non-visual content accompanying the visualization - is different for different values of the quantity.

Accordingly, the method according to claim 1 enables a real-time presentation of visual aids that inform the user of the robotic device's movement path together with a further quantity, which helps the user deal or collaborate with the robotic device in a safer way. In particular, the visual aids may help the user discover and avoid future collisions between themselves and mobile robots. Because the visual aids are amenable to a high degree of spatial and temporal accuracy, the user has the option of stepping out of the robot's path with a reasonable safety margin. If the user and the mobile robotic device share a work area, such accurate indications are clearly in the interest of productivity, knowing that users exposed to non-distinct warnings may otherwise develop a culture of excessive precaution, with loss of productivity.

In one embodiment, the at least one quantity is derivable from the movement path. How such derivation may proceed will be discussed in further detail below.

In another embodiment, the method further comprises obtaining said at least one quantity, e.g., in a manner similar to the obtention of the movement path.

In another aspect, there is provided an information system with the technical features set forth in claim 13.

The information system is technically advantageous in a same or similar way as the method discussed initially.

A further aspect relates to a computer program containing instructions for causing a computer, or the information system in particular, to carry out the above method. The computer program may be stored or distributed on a data carrier. As used herein, a "data carrier" may be a transitory data carrier, such as modulated electromagnetic or optical waves, or a non-transitory data carrier. Non-transitory data carriers include volatile and non-volatile memories, such as permanent and non-permanent storages of magnetic, optical or solid-state type. Still within the scope of "data carrier", such memories may be fixedly mounted or portable.

All terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

### BRIEF DESCRIPTION OF THE DRAWINGS

Aspects and embodiments are now described, by way of example, with reference to the accompanying drawings, on which:
figures 1 and 2 are views, from an observer's position, of AR representations of two work environments, each including a human user, a mobile robotic device and a visualization of a movement path of the robotic device;
figure 3 is a flowchart of a method for indicating a condition of a mobile robotic device, in accordance with an embodiment;
figures 4A and 4B show two different appearances, generated according to an embodiment, of a particle-flow visualization of a movement path in AR, wherein the particles in the particle flow in the vicinity of the user are relatively denser when the robotic device is relatively closer;
figure 5 shows a possible appearance, in accordance with an embodiment, of a visualization in the form of animated pointing elements and a particle flow in the case where a collision or near-collision with the user is predicted;
figure 6A shows a visualization based on pointing elements where color highlighting of pointing elements is used to warn the user that a collision is predicted;
figure 6B shows a further visualization based on pointing elements where color highlighting and overlaying of pointing elements, which illustrate a diversion from the movement path, are used to warn the user that a collision is predicted; and
figure 7 shows components of an AR-based information system and a server communicating with the system.

### DETAILED DESCRIPTION

The aspects of the present disclosure will now be described more fully hereinafter with reference to the accompanying drawings, on which certain embodiments of the invention are shown. These aspects may, however, be embodied in many different forms and should not be construed as limiting; rather, these embodiments are provided by way of example so that this disclosure will be thorough and complete, and to fully convey the scope of all aspects of invention to those skilled in the art. Like numbers refer to like elements throughout the description.

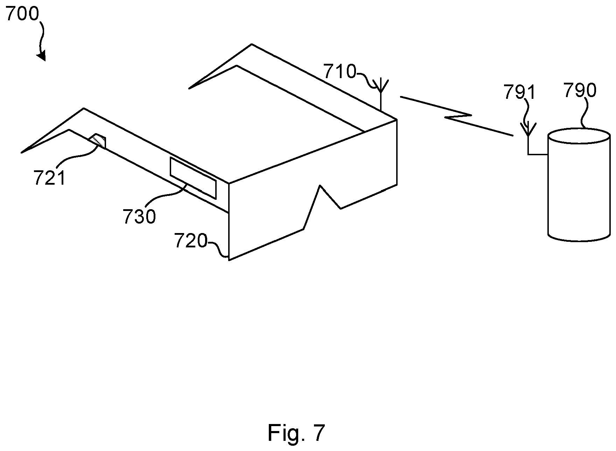

Figure 7 shows an information system 700 which includes an AR interface that can be associated with a user. The user may work in an environment where one or more mobile robotic devices operate. The robotic devices may be mobile over a surface by means of wheels, bands, claws, movable suction cups or other means of propulsion and/or attachment. The surface may be horizontal, slanted or vertical; it may optionally be provided with rails or other movement guides. Thanks to the association of the AR interface and the user, it is possible to visualize planned movement paths of the robotic devices relative to the user position, thereby allowing the use position to be reliably approximated by the position of the AR interface. The AR interface may be associated in this sense by being worn by the user, by being habitually carried in the user's hand or pocket, by requiring personal information of the user (e.g., passwords, biometrics) for unlocking or the like.

The AR interface is here illustrated by glasses 720 - also referred to as smart glasses, AR glasses or a head-mounted display (HMD) - which when worn by a user allow them to observe the environment through the glasses in the natural manner and are further equipped with arrangements for generating visual stimuli adapted to produce, from the user's point of view, an appearance of graphic elements overlaid (or superimposed) on top of the view of the environment. Various ways to generate such stimuli in see-through HMDs are known per se in the art, including diffractive, holographic, reflective and other optical techniques for presenting a digital image to the user.

The illustrated AR interface further includes at least one acoustic transducer, as illustrated by a speaker 721 in the proximity of the user's ear when worn. Preferably, the AR interface comprises at least two acoustic transducers with coherence abilities such that an audio signal with a variable imaginary point of origin can be generated to convey spatial information to the user.

To implement embodiments of the invention, the information system 700 further comprises a communication interface, symbolically illustrated in figure 7 as an antenna 710, and processing circuitry 730. The communication interface 710 allows the information system 700 to obtain at least one planned movement path of the one or more robotic devices and a position of the user. For the purpose of obtaining the planned movement paths, the processing circuitry 730 may interact via the communication interface 710 to request this information from a server 790, which is in charge of scheduling or controlling the robotic devices' movements in the work environment or is in charge of monitoring or coordinating the robotic devices. The server 790 may be equipped with a communication interface 791 that is compatible with the communication interface 710 of the information system 700. The server 790 is configured to generate, collect and/or provide access to up-to-date information concerning the planned movement paths. To obtain the user's position, the system 700 may either rely on positioning equipment in the AR interface (e.g., a cellular chipset with positioning functionality, a receiver for a satellite navigation system) or make a request to an external positioning service.

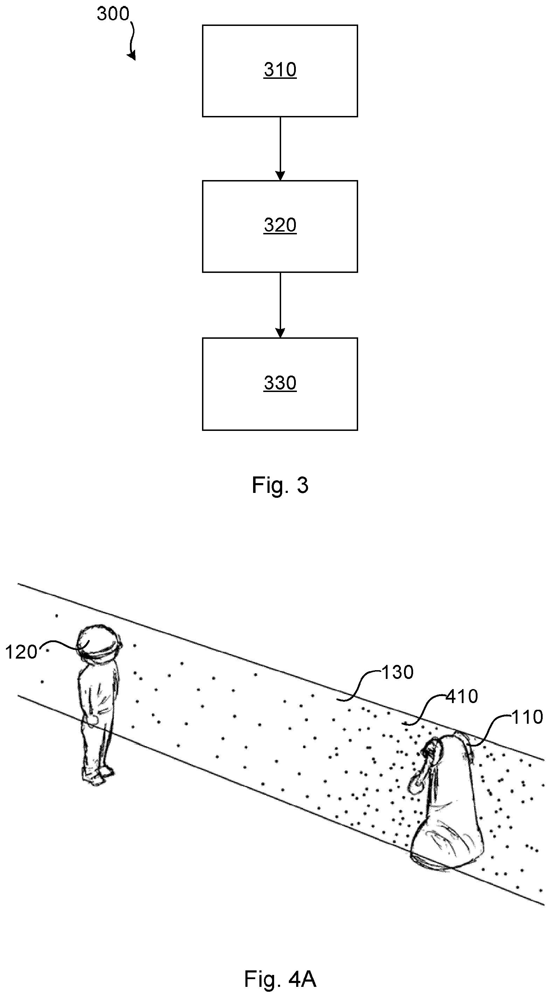

Figure 3 is a flowchart of a method 300 of indicating a condition of the robotic device or devices. The method 300 corresponds to a representative behavior of the information system 700. In a first step 310, the information system 700 obtains at least one planned movement path of the robotic device(s) 110. In a second step 320, the position of the user 120 is obtained. In a third step 330, the AR interface 720, 721 is used to display a visualization of the of the at least one planned movement path relative to the position of the user 120. The third step 330 may be executed continuously, e.g., as long as the user 120 chooses to wear the AR interface 720, 721. The foregoing first 310 and/or second step 320 may be repeated periodically while the third step 330 is executing, to ensure that the information to be visualized is up to date. In particular, repetition of the second step 320 may be triggered by a predefined event indicating that the user 120 has moved, e.g., on the basis of a reading of an inertial sensor arranged in the AR interface 720, 721.

As described above on an overview level, the visualization of the movement path displayed in the third step 330 is rendered in a manner responsive to at least one quantity, which is optionally derivable from the movement path. Specific examples of said quantity include:
1. a robotic device's identity,
2. a robotic device's activity or task,
3. a robotic device's mass or physical dimensions,
4. a robotic device's velocity,
5. a robotic device's proximity to the user position.

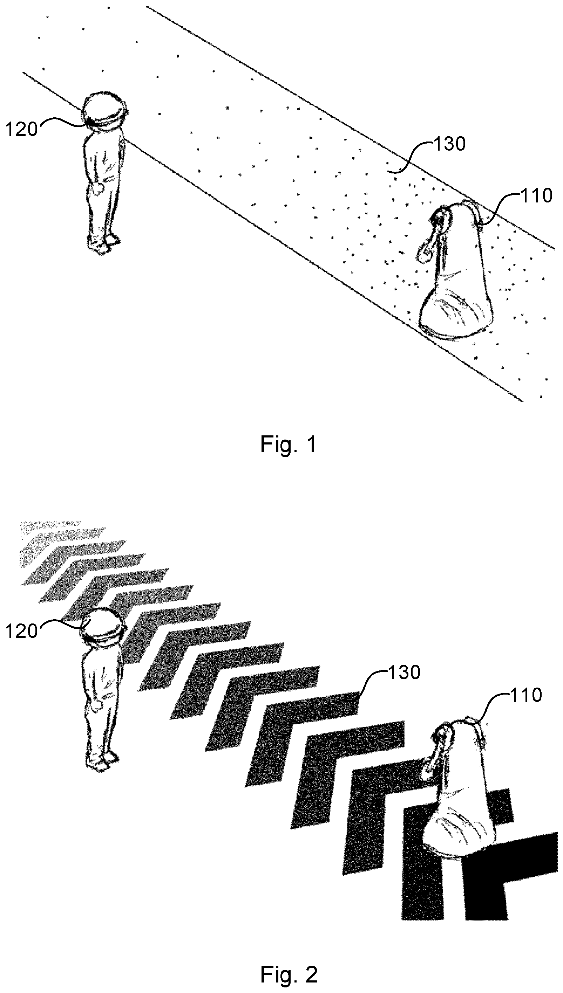

Figure 1 shows an AR representation of a work environment where a mobile robotic device 110 and a user 120 are naturally visible, e.g., through eyeglasses of an HMD. For purposes of illustration, figure 1 is drawn from an observation point located at sufficient distance that both the robotic device 110, user 120 and visualization 130 are visible together; during normal use, however, it is only exceptionally that the user's 120 body is within the user's 120 field of view. In the rendered AR representation, a visualization 130 of the robotic device's 110 movement path comprises a region which corresponds to the shape and position of the movement path. A two-dimensional region may correspond to the portion of the surface that the robotic device's base will visit while moving along the planned movement path. A three-dimensional region may correspond to all points of space visited by any part of the robotic device when it proceeds along the movement path. The visualization 130 belongs to an overlay part of the AR representation, while the user 120 and robotic device 110 may be unmodified (natural) visual features of the work environment.

Figure 2 shows an alternative AR representation of an identical work environment. A main difference is that the visualization 130 is composed of pointing elements (here, chevrons) aligned with the planned movement path. The pointing elements may be static or animated.

Figures 1 and 2 serve to illustrate above Example 1, because a hue of pointing elements (and optionally a hue of a shading applied to a region corresponding to the movement path) is selected in view of the moving robotic device 110. Furthermore, in a visualization in the form of flowing particles, the hue of the particles may be assigned in accordance with a robotic device's identity. For instance, a first device may be associated with a first hue (e.g., green) while a second device may be associated with a second, different hue (e.g., red). It is recalled that intensity-normalized chromaticity can be represented as a pair of *hue* and *saturation,* out of which hue may correspond to the perceived (and possibly named) color. Letting the hue used for the visualization 130 correspond to an identity of the robotic device 110 aids the user 120 to recognize or identify an unknown oncoming robotic device 110. It moreover assists the user 120 in distinguishing two simultaneously visible visualizations 130 of movement paths belonging to two separate robotic devices 110. The saturation component may be used to illustrate one or more further quantities, as discussed below.

Figures 1 and 2 furthermore serve to illustrate Example 2, namely, embodiments where the visualization 130 is generated in such manner that the hue of a shaded region, particles or pointing elements (figures 1 and 2) corresponds to an activity or task. An activity may for instance be an internal state of the robotic device, e.g., Operation, Idle, Standby, Parked, Failure, Maintenance. A task may be a high-level operation, typically of industrial utility, which the robotic device performs, e.g., sorting, moving, lifting, cutting, packing. The activity or task may be included in the obtained information representing the planned movement path or may equivalently be obtained from a different data source. Such activity/task-based coloring may replace the use of an identity-based hue, so that movement paths for all robotic devices performing the same task are visualized using the same hue. Alternatively, the task/activity-based component is added as a second hue, in addition to the identity-based hue, to create stripes, dots or another multi-colored appearance. The information that a robotic device is currently in a non-moving state (e.g., Standby) or is engaged in a non-moving activity (e.g., packing) indicates to the user 120 that the device's travel along the planned movement path is not imminent.

Example 3 provides that the robotic device's mass or physical dimensions may be represented in audible form. The information system 700 may be able to determine the mass or physical dimensions by extracting an identity of the robotic device 110 from the planned movement path and consulting a look-up table or database associating identities of the robotic devices with their model, type etc. For instance, a number of distinguishable different tunes (melodies) played as an audio signal accompanying the visualization 130 may correspond to different weight or size classes of the robotic devices. The visualization 130 may be of any of the various types described in other sections of this disclosure. Different pitches or average pitches may be used for the same purpose, e.g., that a lower pitch may correspond to a heavier and/or taller robotic device and a higher pitch may correspond to a lighter and/or lower device. This assists the user 120 in selecting an adequate safety margin, knowing that heavier robotic devices normally pose a more serious risk of physical injury.

Regarding Example 4, it is clearly within the skilled person's abilities to derive the velocity of the robotic device 110 from a planned movement path that specifies locations at different points in time. Stereophonic or spatial playback of an audio signal through multiple speakers 721 of the AR interface, wherein the relative phases and/or intensities (panning) are controlled, may furthermore be used to indicate the vector aspect (direction) of the robotic device's velocity. More precisely, an imaginary point of origin of a played-back audio signal accompanying the visualization 130 may correspond to the robotic device's 110 direction relative to the user 120. Alternatively, the imaginary point of origin may illustrate the robotic device's 110 location. Further still, an imaginary point of origin which is moving during the playback of the audio signal may correspond to the geometry of the planned movement path. This provides the user 120 with an approximate idea of the planned movement path while leaving their visual perception available for other information.

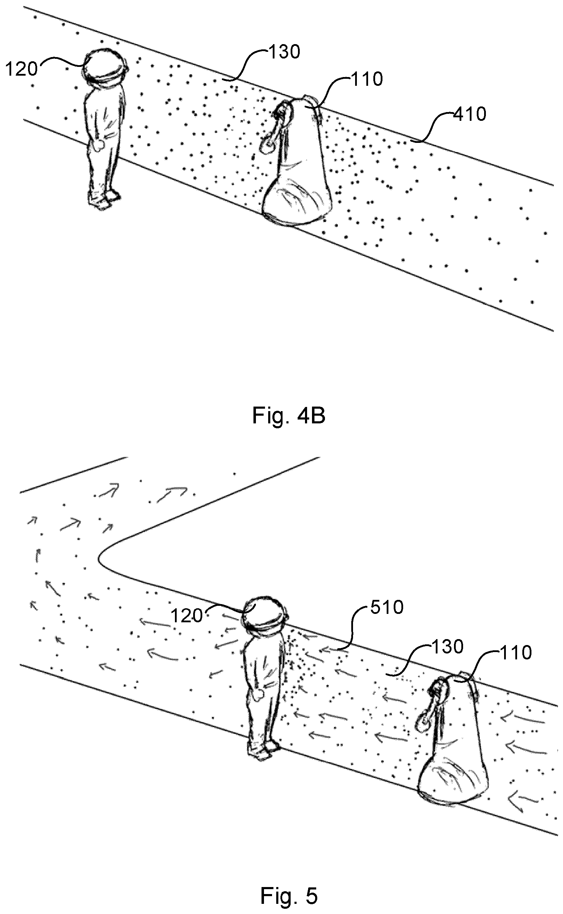

Still within Example 4, the scalar aspect (speed) of the robotic device's 110 velocity may be reflected by the visualization 130. For instance, figure 4 shows an AR visualization 130 rendered as an animated particle flow 410, wherein the speed at which the particles move may vary with the speed of the robotic device 110 along the planned movement path. In a similar way, the speed of animated pointing elements in a visualization 130 of the type shown in figure 2 may vary with the speed of the robotic device 110. The sense (right/left, forward/backward) in which the particles or pointing objects move will furthermore inform the user 120 of the sense of the robotic device's 110 planned movement; this is clearly useful when the robotic device 110 is out of the user's 120 sight.

Turning to Example 5, figure 4A shows that a relatively denser flow of particles 410 is used when the robotic device 110 is close to the user 120 while, as illustrated in figure 4B, a relatively sparser flow 410 is used when the robotic device 110 is more distant. The particle density may be related to proximity (or closeness) in terms of distance or, in consideration of the robotic device's 110 planned speed according to the planned movement path, to the predicted travel time up to the user 120. Further ways to illustrate proximity include the saturation (see above definition of chromaticity as a combination of hue and saturation) used for graphical elements in the visualization 130 and a loudness of an audio signal which accompanies the visualization 130. Equivalents of the saturation as a means to indicate proximity include lightness, brightness and colorfulness. A user 120 who is correctly informed of the proximity of a robotic device 110 is able to apply adequate safety measures.

An important special case of Example 5 is the indication of a collision risk to the user 120. A collision risk may be estimated as the robotic device's 110 minimal distance to the user 120 over the course of the planned movement path, wherein a distance of zero may correspond to an unambiguous collision unless the user 120 moves. The visualization 130 may be generated such that the severity of this risk is communicated to the user 120. Figure 5 illustrates how this can be achieved in the case of an animation of pointing elements. The pointing elements are here arrows 510, which are furthermore accompanied by a particle flow. To illustrate a predicted collision at the current position of user 120, the animated arrows are locally shifted, i.e., rotated away from the tangential direction of the visualized planned movement path, to suggest that the robotic device 110 will not be able to proceed as planned. It is furthermore shown in figure 5 that the flowing particles can be brought to locally accumulate in front of the user, thereby forming a local deviation. This serves to warn the user 120 of a collision risk.

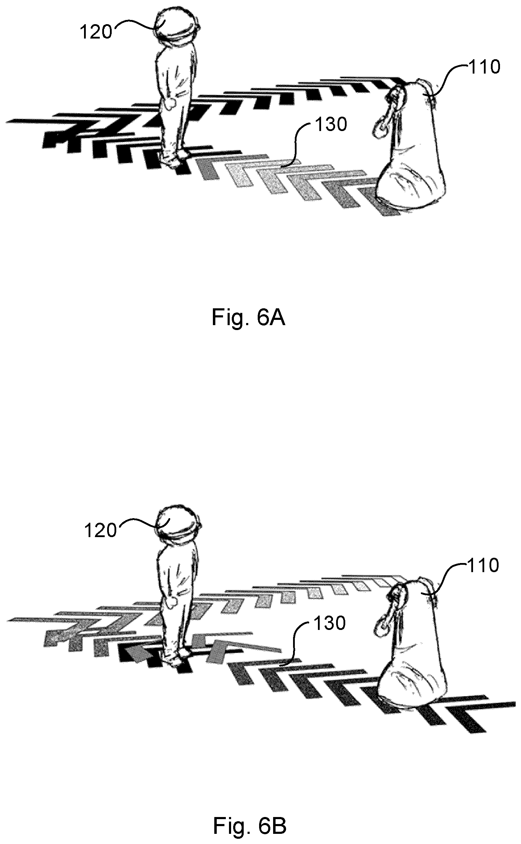

Figure 6 illustrates, still within Example 5, how a collision risk can be indicated by a differing color or hue of stationary or animated pointing elements shown located in the surface where the robotic device 110 is moving. Figure 6A refers to a case where, for various reasons, the robotic device 110 *cannot* change its movement path to avoid the collision. To illustrate this, three different colors are used: a first color (e.g., normal color, such as an identity-based hue) to indicate the unobstructed initial segment of the planned movement path; a second color (e.g., alerting color, such as red) to indicate the expected point of collision; and a third color (e.g., grey) to indicate the not trafficable segment of the planned movement path beyond the user position. Flashing or animations may be used in addition to coloring to increase visibility.

Figure 6B refers to the converse case, i.e., where the robotic device 110 *can* deviate from its movement path to avoid the collision. Then, the path segment around the user's 120 position is greyed out, and the diversion from the planned movement path (i.e., around the user 120) is superimposed. One color, or a set of similar colors, may be used for the initial segment, the diversion and the segment beyond the user 120 in the visualization 130. In addition to the collision warning, the user 120 receives advance information of how the robotic device 110 is going to handle the predicted collision. While the diversion represents a relatively close passage, it may be deemed not justified to use the alerting color as in figure 6A.

The aspects of the present disclosure have mainly been described above with reference to a few embodiments. However, as is readily appreciated by a person skilled in the art, other embodiments than the ones disclosed above are possible within the scope of the invention, as defined by the appended patent claims.

## Claims

1. A method (300) of indicating a condition of one or more mobile robotic devices (110) to a user (120), comprising:
obtaining (310) at least one planned movement path of the robotic devices;
obtaining (320) a position of the user; and
displaying (330), by means of an augmented-reality, AR, interface (720, 721) associated with the user, a visualization (130) of the at least one planned movement path relative to the user position,
**characterized in that** the visualization of the at least one movement path is responsive to at least one quantity selected from:
a robotic device's identity,
a robotic device's activity or task,
a robotic device's mass or physical dimensions, which are represented by a tune or an average pitch of an audio signal accompanying the visualization.

2. The method (300) of claim 1, further comprising obtaining said at least one quantity.

3. The method (300) of claim 1, wherein the planned movement path is a data structure which represents locations of the at least one robotic device at different points in time and which optionally includes specifies of the robotic device, such that said at least one quantity is derivable from this data structure.

4. The method (300) of any of the preceding claims, wherein the AR interface (720, 721) associated with the user is worn by the user (120).

5. The method (300) of any of the preceding claims, wherein the robotic device's identity, activity or task is represented by any of:
a hue of particles of a particle flow (410),
a hue of animated pointing elements (510).

6. The method (300) of any of the preceding claims, wherein the visualization (130) is responsive to the sense of the robotic device's (110) planned movement path.

7. The method (300) of any of the preceding claims, wherein the robotic device's (110) direction relative to the user (120) is represented by an imaginary point of origin of an audio signal accompanying the visualization.

8. The method (300) of any of the preceding claims, wherein the visualization (130) is responsive to the robotic device's (110) proximity in terms of travel time.

9. The method (300) of claim 8, wherein the robotic device's (110) proximity is represented by any of:
a particle density of a particle flow,
a lightness, brightness, colorfulness or saturation of animated pointing elements,
a loudness of an audio signal accompanying the visualization.

10. The method (300) of any of the preceding claims, wherein the robot device's proximity to the user position includes the robotic device's (110) risk of colliding with the user (120).

11. The method (300) of claim 10, wherein a risk of colliding with the user (120) that exceeds a predetermined threshold is represented by any of:
a local deviation from the movement path of particles of a particle flow,
a shift of animated pointing elements.

12. The method (300) of any of the preceding claims, wherein the visualization of the movement path is responsive to at least one quantity selected from:
a robotic device's identity,
a robotic device's internal state,
a robotic device's high-level operation of industrial utility,
a robotic device's mass or physical dimensions, which are represented by a tune or an average pitch of an audio signal accompanying the visualization.

13. An information system (700) configured to indicate a condition of one or more robotic devices (110) to a user (120), the information system comprising:
a communication interface (710) for obtaining
- at least one planned movement path of the robotic devices, and
- a position of the user;
an augmented-reality, AR, interface (720, 721) associated with the user; and
processing circuitry (730) configured to display, by means of the AR interface, a visualization (130) of the at least one planned movement path relative to the user position,
**characterized in that** the visualization of the at least one planned movement path is responsive to at least one quantity selected from:
a robotic device's identity,
a robotic device's activity or task,
a robotic device's mass or physical dimensions, which are represented by a tune or an average pitch of an audio signal accompanying the visualization.

14. A computer program comprising instructions to cause the information system (700) of claim 13 to execute the steps of the method (300) of any of claims 1 to 12.

15. A data carrier having stored thereon the computer program of claim 14.

## Patentansprüche

1. Verfahren (300) zum Angeben eines Zustands einer oder mehrerer mobiler Robotervorrichtungen (110) an einen Benutzer (120), das Folgendes umfasst:
Erhalten (310) mindestens eines geplanten Bewegungspfades der Robotervorrichtungen;
Erhalten (320) einer Position des Benutzers; und
Anzeigen (330), mittels einer Augmented-Reality- bzw. AR-Schnittstelle (720, 721), die mit dem Benutzer assoziiert ist, einer Visualisierung (130) des mindestens einen geplanten Bewegungspfades relativ zu der Benutzerposition,
**dadurch gekennzeichnet, dass** die Visualisierung des mindestens einen Bewegungspfades auf mindestens eine Größe reagiert, die ausgewählt ist aus:
eine Identität einer Robotervorrichtung,
eine Aktivität oder Aufgabe einer Robotervorrichtung,
eine Masse oder physische Abmessungen einer Robotervorrichtung, die durch eine Melodie oder eine durchschnittliche Tonhöhe eines Audiosignals, das die Visualisierung begleitet, repräsentiert werden.

2. Verfahren (300) nach Anspruch 1, das ferner das Erhalten der mindestens einen Größe umfasst.

3. Verfahren (300) nach Anspruch 1, wobei der geplante Bewegungspfad eine Datenstruktur ist, die Orte der mindestens einen Robotervorrichtung zu unterschiedlichen Zeitpunkten repräsentiert und die optional Einzelheiten der Robotervorrichtung beinhaltet, so dass die mindestens eine Größe aus dieser Datenstruktur ableitbar ist.

4. Verfahren (300) nach einem der vorhergehenden Ansprüche, wobei die AR-Schnittstelle (720, 721), die mit dem Benutzer assoziiert ist, von dem Benutzer (120) getragen wird.

5. Verfahren (300) nach einem der vorhergehenden Ansprüche, wobei die Identität, Aktivität oder Aufgabe der Robotervorrichtung durch eines des Folgenden repräsentiert wird:
einen Farbton von Partikeln eines Partikelstroms (410),
einen Farbton animierter Zeigeelemente (510).

6. Verfahren (300) nach einem der vorhergehenden Ansprüche, wobei die Visualisierung (130) auf den Sinn des geplanten Bewegungspfades der Robotervorrichtung (110) reagiert.

7. Verfahren (300) nach einem der vorhergehenden Ansprüche, wobei die Richtung der Robotervorrichtung (110) relativ zu dem Benutzer (120) durch einen imaginären Ursprungspunkt eines Audiosignals repräsentiert wird, das die Visualisierung begleitet.

8. Verfahren (300) nach einem der vorhergehenden Ansprüche, wobei die Visualisierung (130) auf die Nähe der Robotervorrichtung (110) hinsichtlich der Fahrzeit reagiert.

9. Verfahren (300) nach Anspruch 8, wobei die Nähe der Robotervorrichtung (110) durch eines von Folgendem repräsentiert wird:
eine Partikeldichte eines Partikelstroms,
eine Helligkeit, Leuchtkraft, Farbigkeit oder Sättigung animierter Zeigeelemente,
eine Lautstärke eines Audiosignals, das die Visualisierung begleitet.

10. Verfahren (300) nach einem der vorhergehenden Ansprüche, wobei die Nähe der Robotervorrichtung zu der Benutzerposition das Kollisionsrisiko der Robotervorrichtung (110) mit dem Benutzer (120) beinhaltet.

11. Verfahren (300) nach Anspruch 10, wobei ein Kollisionsrisiko mit dem Benutzer (120), das eine vorbestimmte Schwelle überschreitet, durch eines von Folgendem repräsentiert wird:
eine lokale Abweichung von dem Bewegungspfad von Partikeln eines Partikelstroms,
eine Verschiebung animierter Zeigeelemente.

12. Verfahren (300) nach einem der vorhergehenden Ansprüche, wobei die Visualisierung des Bewegungspfades auf mindestens eine Größe reagiert, die aus Folgendem ausgewählt ist:
eine Identität einer Robotervorrichtung,
ein interner Zustand einer Robotervorrichtung,
ein Betrieb einer Robotervorrichtung für industrielle Zwecke auf hoher Ebene,
eine Masse oder physische Abmessungen einer Robotervorrichtung, die durch eine Melodie oder eine durchschnittliche Tonhöhe eines Audiosignals, das die Visualisierung begleitet, repräsentiert werden.

13. Informationssystem (700), das dazu ausgelegt ist, einem Benutzer (120) einen Zustand einer oder mehrerer Robotervorrichtungen (110) anzugeben, wobei das Informationssystem Folgendes umfasst:
eine Kommunikationsschnittstelle (710) zum Erhalten von
- mindestens eines geplanten Bewegungspfades der Robotervorrichtungen, und
- einer Position des Benutzers;
eine Augmented-Reality- bzw. AR-Schnittstelle (720, 721), die mit dem Benutzer assoziiert ist; und
eine Verarbeitungsschaltungsanordnung (730), die dazu ausgelegt ist, mittels der AR-Schnittstelle eine Visualisierung (130) des mindestens einen geplanten Bewegungspfades relativ zu der Benutzerposition anzuzeigen,
**dadurch gekennzeichnet, dass** die Visualisierung des mindestens einen geplanten Bewegungspfades auf mindestens eine Größe reagiert, die ausgewählt ist aus:
eine Identität einer Robotervorrichtung,
eine Aktivität oder Aufgabe einer Robotervorrichtung,
eine Masse oder physische Abmessungen einer Robotervorrichtung, die durch eine Melodie oder eine durchschnittliche Tonhöhe eines Audiosignals, das die Visualisierung begleitet, repräsentiert werden.

14. Computerprogramm, das Anweisungen umfasst, um das Informationssystem (700) nach Anspruch 13 zu veranlassen, die Schritte des Verfahrens (300) nach einem der Ansprüche 1 bis 12 auszuführen.

15. Datenträger, auf dem das Computerprogramm nach Anspruch 14 gespeichert ist.

## Revendications

1. Procédé (300) d'indication d'une condition d'un ou de plusieurs dispositifs robotiques mobiles (110) à un utilisateur (120), comprenant les faits suivants :
obtenir (310) au moins un trajet de mouvement planifié des dispositifs robotiques ;
obtenir (320) une position de l'utilisateur ; et
afficher (330), au moyen d'une interface de réalité augmentée, Augmented Reality AR, (720, 721) associée à l'utilisateur, une visualisation (130) de l'au moins un trajet de mouvement planifié relativement à la position d'utilisateur,
**caractérisé en ce que** la visualisation de l'au moins un trajet de mouvement est en réponse à au moins une quantité sélectionnée parmi :
une identité du dispositif robotique,
une activité ou tâche du dispositif robotique,
une masse ou des dimensions physiques du dispositif robotique, qui sont représentées par un ton ou une hauteur moyenne d'un signal audio accompagnant la visualisation.

2. Procédé (300) de la revendication 1, comprenant en outre le fait d'obtenir ladite au moins une quantité.

3. Procédé (300) de la revendication 1, dans lequel le trajet de mouvement planifié est une structure de données qui représente des emplacements de l'au moins un dispositif robotique à des instants différents et qui, facultativement, inclut des détails du dispositif robotique, de manière telle que ladite au moins une quantité puisse être dérivée de cette structure de données.

4. Procédé (300) de quelconques des revendications précédentes, dans lequel l'interface AR (720, 721) associée à l'utilisateur est portée par l'utilisateur (120).

5. Procédé (300) de quelconques des revendications précédentes, dans lequel l'identité, l'activité ou la tâche du dispositif robotique est représentée par de quelconques parmi :
une teinte de particules d'un écoulement de particules (410),
une teinte d'éléments d'indication animés (510).

6. Procédé (300) de quelconques des revendications précédentes, dans lequel la visualisation (130) est en réponse au sens du trajet de mouvement planifié du dispositif robotique (110).

7. Procédé (300) de quelconques des revendications précédentes, dans lequel la direction du dispositif robotique (110) relativement à l'utilisateur (120) est représentée par un point imaginaire d'origine d'un signal audio accompagnant la visualisation.

8. Procédé (300) de quelconques des revendications précédentes, dans lequel la visualisation (130) est en réponse à la proximité du dispositif robotique (110) quant à un temps de déplacement.

9. Procédé (300) de la revendication 8, dans lequel la proximité du dispositif robotique (110) est représentée par de quelconques parmi :
une densité de particules d'un écoulement de particules une clarté, luminosité, caractéristique colorée, ou saturation d'éléments d'indication animés,
un volume d'un signal audio accompagnant la visualisation.

10. Procédé (300) de quelconques des revendications précédentes, dans lequel la proximité du dispositif robotique par rapport à la position d'utilisateur inclut le risque que le dispositif robotique (110) entre en collision avec l'utilisateur (120).

11. Procédé (300) de la revendication 10, dans lequel un risque de collision avec l'utilisateur (120) qui dépasse un seuil prédéterminé est représenté par de quelconques parmi :
un écart local par rapport au trajet de mouvement de particules d'un écoulement de particules,
un décalage d'éléments d'indication animés.

12. Procédé (300) de quelconques des revendications précédentes, dans lequel la visualisation du trajet de mouvement est en réponse à au moins une quantité sélectionnée parmi :
une identité du dispositif robotique,
un état interne du dispositif robotique,
une opération de haut niveau d'utilité industrielle du dispositif robotique,
une masse ou des dimensions physiques du dispositif robotique, qui sont représentées par un ton ou une hauteur moyenne d'un signal audio accompagnant la visualisation.

13. Système d'informations (700) configuré pour indiquer une condition d'un ou de plusieurs dispositifs robotiques (110) à un utilisateur (120), le système d'informations comprenant :
une interface de communication (710) pour obtenir
- au moins un trajet de mouvement planifié des dispositifs robotiques, et
- une position de l'utilisateur ;
une interface de réalité augmentée, Augmented Reality AR, (720, 721) associée à l'utilisateur ; et
une circuiterie de traitement (730) configurée pour afficher, au moyen de l'interface AR, une visualisation (130) de l'au moins un trajet de mouvement planifié relativement à la position d'utilisateur,
**caractérisé en ce que** la visualisation de l'au moins un trajet de mouvement planifié est en réponse à au moins une quantité sélectionnée parmi :
une identité du dispositif robotique,
une activité ou tâche du dispositif robotique,
une masse ou des dimensions physiques du dispositif robotique, qui sont représentées par un ton ou une hauteur moyenne d'un signal audio accompagnant la visualisation.

14. Programme d'ordinateur comprenant des instructions pour amener le système d'informations (700) de la revendication 13 à exécuter les étapes du procédé (300) de quelconques des revendications 1 à 12.

15. Support de données ayant, stockées sur celui-ci, le programme d'ordinateur de la revendication 14.
